(19) Europäisches Patentamt
European Patent Office
Office européen des brevets

(11) **EP 4 176 285 B1**

(12) **EUROPÄISCHE PATENTSCHRIFT**

(45) Veröffentlichungstag und Bekanntmachung des Hinweises auf die Patenterteilung:
**29.05.2024   Patentblatt 2024/22**

(21) Anmeldenummer: **21742696.4**

(22) Anmeldetag: **05.07.2021**

(51) Internationale Patentklassifikation (IPC):
**G01S 15/52** *(2006.01)*     **G01S 15/58** *(2006.01)*
**G01S 15/87** *(2006.01)*     **G01S 15/931** *(2020.01)*

(52) Gemeinsame Patentklassifikation (CPC):
**G01S 15/58; G01S 15/52; G01S 15/588;**
**G01S 15/876;** G01S 2015/937; G01S 2015/938

(86) Internationale Anmeldenummer:
**PCT/DE2021/100573**

(87) Internationale Veröffentlichungsnummer:
**WO 2022/007999 (13.01.2022 Gazette 2022/02)**

(54) **DOPPLERBASIERTE BESTIMMUNG DER GESCHWINDIGKEITSRICHTUNG**

DOPPLER-BASED DETERMINATION OF VELOCITY DIRECTION

DÉTERMINATION DE DIRECTION DE VITESSE BASÉE SUR L'EFFET DOPPLER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.07.2020   DE 102020117741**

(43) Veröffentlichungstag der Anmeldung:
**10.05.2023   Patentblatt 2023/19**

(73) Patentinhaber: **Elmos Semiconductor SE**
**44227 Dortmund (DE)**

(72) Erfinder: **ACKERMANN, Dimitri**
**44309 Dortmund (DE)**

(56) Entgegenhaltungen:
**EP-A1- 3 299 845          DE-A1-102009 029 465**
**DE-B3-102018 121 962**

## Beschreibung

### Feld der Erfindung

Die Erfindung richtet sich auf ein Verfahren zur Bestimmung des dreidimensionalen oder des zweidimensionalen Geschwindigkeitsvektors eines Objekts im Umfeld eines Fahrzeugs.

### Allgemeine Einleitung

Diese Schrift befasst sich mit der Geschwindigkeitsbestimmung von Objekten im Umfeld eines Fahrzeugs mittels Auswertung der Dopplerverschiebung.

Im Stand der Technik sind zahlreiche Schriften zur Bestimmung von Parametern von Objekten mittels Ultraschallmessung bekannt. Aufgrund dessen können einige Voraussetzungen angegeben werden, ohne dass eine Erläuterung der entsprechenden, aus dem Stand der Technik bekannten Verfahren und Vorrichtungen hier notwendig wären.

Dementsprechend können einige Voraussetzungen hier angenommen werden, die solche Messungen mit den zur Verfügung stehenden Ultraschall-Transducern ermöglichen.

Vorausgesetzt wird in dieser Schrift, dass die Objekt-Position $x_0$ eines Objekts bestimmt werden kann. Vereinfachend wird hier angenommen, dass dies zeitlich vor der Bestimmung der Dopplergeschwindigkeiten bereits durch Auswertung der Ultraschallsignallaufzeiten vom jeweiligen Ultraschall-Transducer zum Objekt und wieder zurück zu einem oder mehreren der Uraschall-Transducer geschehen ist und dass somit die Objekt-Position $x_0$ als bekannt vorausgesetzt werden kann.

Des Weiteren wird vorausgesetzt, dass im Falle der Bestimmung der Koordinaten in einer zweidimensionalen Ebene, in der sich mindestens zwei Ultraschall-Transducer nicht an einem Punkt befinden und dass im Falle der Bestimmung der Koordinaten in einem dreidimensionalen Raum, die mindestens drei Ultraschall-Transducer sich nicht an einem Punkt und nicht in einer Linie befinden.

Das Ultraschallmesssystem jedes Ultraschall-Transducers bestimmt eine Dopplerfrequenz $f_{d,i}$, wobei der Index i für den i-ten der N Ultraschall-Transducer steht.

Aus der DE 10 2009 029 465 A1 ist ein Verfahren zur Bestimmung eines Geschwindigkeitsvektors ($\hat{v}_o$) eines Objekts im Umfeld eines Fahrzeugs bekannt. Das Fahrzeug (F) weist zwei UltraschallTransducer und ein Auswertesystem auf. Die N Ultraschall-Transducer befinden sich an zwei verschiedenen Punkten $x_1$, $x_2$. Ein Ultraschall-Transducer der beiden Ultraschall-Transducer sendet ein Ultraschallsignal aus. Jeder der beiden Ultraschall-Transducer weist jeweils eine spezifische Laufzeit auf, wobei die jeweilige Laufzeit vom jeweils zurückgelegten Schallweg abhängt. Die beiden Ultraschall-Transducer empfangen das durch ein Objekt im Umfeld des Fahrzeugs reflektierte Ultraschallsignal. Das Auswertesystem ermittelt aus den beiden Laufzeiten des Ultraschallsignals von dem Zeitpunkt deren Aussendung bis zum jeweiligen Zeitpunkt des Empfangs des durch das Objekt reflektierten Ultraschallsignals durch jeweils einen Ultraschall-Transducer der beiden Ultraschall-Transducer eine Objekt-Position ($x_0$). Jeder Ultraschall-Transducer ($US_i$) der beiden Ultraschalltransducer, im Folgenden als i-ter Ultraschall-Transducer ($US_i$) bezeichnet, ermittelt im Zusammenwirken mit dem Auswertesystem eine Dopplerfrequenz $f_{d,i}$ für diesen i-ten UltraschallTransducer ($US_i$). Für jeden i-ten Ultraschall-Transducer der beiden Ultraschall-Transducer ist die i-te Position ($x_i$) als eine von zwei Positionen am Fahrzeug bekannt. Das Verfahren der D1 umfasst u.a. die Schritte des Bestimmens der Objekt-Position $x_0$ des Objektsrelativ zum Fahrzeug, und des Erfassens der zwei Dopplerfrequenzen ( $f_{d,1}$, $f_{d,2}$) und des Berechnens der zwei Dopplergeschwindigkeiten auf Basis der zwei Dopplerfrequenzen ($f_{d,1}$, $f_{d,2}$) bei der jeweiligen Sendefrequenz ($f_s$) unter Berücksichtigung der Schallgeschwindigkeit ($\hat{c}$) und der Bestimmung des zwei-dimensionalen Vektors $\hat{y}$ der durch die N Ultraschall-Transducer gemessenen zwei Dopplergeschwindigkeiten. Die technische Lehre der DE 10 2009 029 465 A1 offenbart für ein solches Paar von Geschwindigkeitswerten die Bestimmung eines gemeinsamen Geschwindigkeitsvektors mittels trigonometrischer Gleichungen. Die technische Lehre der DE 10 2009 029 465 A1 offenbart nicht die Behandlung der Messwerte von mehr als zwei Ultraschall-Transducern.

Aus der EP 3 299 845 A1 ist ein Verfahren zur Ermittlung der Position eines Objekts vor einem Fahrzeug mittels Triangulation bekannt. Aus der DE 10 2018 121 962 B1 ist ein Verfahren zur Auswertung von Ultraschallsignalen bekannt, das ein neuronales Netzwerkmodell verwendet.

### Aufgabe

Dem Vorschlag liegt daher die Aufgabe zugrunde, ein Verfahren zur Messung der Geschwindigkeit eines bewegten Objektes in Betrag und Richtung zu ermöglichen.

Diese Aufgabe wird durch ein Verfahren nach den Ansprüchen gelöst.

### Lösung der Aufgabe

Die Grundidee des hier vorgelegten Vorschlags ist es, bei einer Bewegung eines Objekts mit einer Geschwindigkeit $v_0$ quer zum Ultraschallmesssystem eines Fahrzeugs von mehreren Ultraschall-Transducern an verschiedenen Punkten der Stoßstange mittels der Auswertung der durch mehrere Ultraschall-Transducer und deren Auswertesystem erfassten mehreren unterschiedlichen Doppler-Verschiebungen die Bewegungsrichtung des Geschwindigkeitsvektors $\hat{v}_o$ in x-y-und z-Richtung zu bestimmen. Somit kann bei einer Bewegung eines Objekts quer zum Ultraschallmesssystem eines Fahrzeugs von mehreren Ultraschallmesssystemen mit Ultraschall-Transducern an verschiedenen Punkten eines Fahrzeugs, beispielsweise an verschiedenen Punkten der Stoßstange eines solchen Fahrzeugs, über die dann auftretenden unterschiedlichen Doppler-Verschiebungen die echte Bewegungsrichtung geschätzt werden.

Wie oben beschrieben, wird hier vorausgesetzt, dass die Position $x_0$ des Objekts im Umfeld des Fahrzeugs bekannt ist. Die Aufgabe ist nun, den Geschwindigkeitsvektor in Betrag und Richtung für das Objekt an der Objekt-Position $x_0$ zu ermitteln. Die Anzahl der Ultraschall-Transducer sei N mit N als ganzer positiver Zahl größer 1 bei zweidimensionalen Problemen und größer 2 bei dreidimensionalen Problemen. Somit sollten für zwei-dimensionale Probleme mindestens zwei Ultraschall-Transducer vorhanden sein, wobei ein erster Ultraschall-Transducer an einer Position und ein zweiter Ultraschall-Transducer an einer von der ersten Position verschiedenen Position mit dem Fahrzeug verbunden sind. Für drei-dimensionale Probleme sollten mindestens drei UltraschallTransducer mit dem Fahrzeug verbunden sein, wobei die Positionen der Ultraschall-Transducer sich jeweils voneinander unterscheiden.

Jeder der Ultraschall-Transducer, der an dem hier beschriebenen Verfahren teilnimmt, ist dazu eingerichtet, im Zusammenwirken mit einem Auswertesystem eine Dopplergeschwindigkeit zu dem Objekt an der Objekt-Position $x_0$ zu ermitteln.

In dem hier beschriebenen Verfahren erfasst ein Ultraschall-Transducer der N Ultraschall-Transducer nur den Richtungsanteil der Dopplergeschwindigkeit des Objekts in Richtung vom Objekt zu dem betreffenden Ultraschall-Transducer.

Somit besitzen Objekte, die sich senkrecht zur Sichtlinie zwischen einem Ultraschall-Transducer und dem betreffenden Objekt bewegen, für den betreffenden Ultraschall-Transducer die Geschwindigkeit v=0m/s. Daher werden mehrere Messwerte mehrerer Ultraschall-Transducer dafür verwendet, die Komponenten des Geschwindigkeitsvektors zu ermitteln. Die mehreren Ultraschall-Transducer müssen zueinander beabstandet angeordnet sein. Dadurch wird sichergestellt, dass bei einem sich mit einer relevanten Geschwindigkeit bewegenden Objekt nicht alle erfassten Richtungsanteile der Dopplergeschwindigkeit des Objekts zur gleichen Zeit 0m/s betragen.Zur Bestimmung des Geschwindigkeitsvektors des Objekts misst eine Mehrzahl von N Ultraschall-Transducern $US_1$ bis $US_N$ jeweils eine Dopplerfrequenz $f_{d,1}$ bis $f_{d,N}$.

Auf Basis der erfassten Dopplerfrequenzen $f_{d,1}$ bis $f_{d,N}$ im Verhältnis zur ursprünglichen Sendefrequenz $f_s$ und unter Berücksichtigung der Schallgeschwindigkeit c lässt sich das folgende Gleichungssystem aufstellen:

$$\underbrace{\begin{pmatrix} c\left(f_{d,1}f_s^{-1}-1\right) \\ \vdots \\ c\left(f_{d,N}f_s^{-1}-1\right) \end{pmatrix}}_{\hat{y}}=X\hat{v}_o$$

Dabei bedeuten:

$\hat{v}_o$    unbekannter und gesuchter Geschwindigkeitsvektor;

$\hat{y}$    Dies ist ein Vektor N Dopplergeschwindigkeiten. Wobei sich die N Dopplergeschwindigkeiten aus den mittels den N Ultraschall-Transducern gemessenen Dopplerfrequenzen $f_{d,1}$ bis $f_{d,N}$ bei der jeweiligen Sendefrequenz $f_s$ unter Berücksichtigung der Schallgeschwindigkeit c ergeben.

X    ist eine Matrix mit bekannten Größen. Sie kodiert die Positionen und Ausrichtungen der einzelnen Ultraschall-Transducer.

Im Folgenden wird oft ein einzelner Ultraschall-Transducer oder nur eine Zeile des linearen Gleichungssystems betrachtet. Hierzu führen wir den positiven, ganzzahligen Index i mit $1 \leq i \leq N$ ein.

Jede i-te Zeile der Matrix wird nun folgendermaßen berechnet, wobei sich die i-te Zeile von X aus den Zeilenvektoren $e_i D_i(\beta_i)$ ergibt:

$$X_i = e_i D_i\left(\beta_i\right) = e_i D_i\left(\beta_{i,x},\ \beta_{i,y},\ \beta_{i,z}\right)$$

$e_i$ ist der normierte Einheitsrichtungsvektor längs der Strecke zwischen dem Objekt und dem i-ten Ultraschall-Transducer $US_i$ gemäß der Formel:

$$e_i = (x_o - x_i) / \| x_o - x_i \|$$

$D_i(\beta_i)$ ist eine Drehmatrix in Abhängigkeit der drei Drehwinkel $(\beta_{i,x},\ \beta_{i,y},\ \beta_{i,z})$ des i-ten UltraschallTransducer $US_i$ spezifischen i-ten Drehwinkelvektors $\beta_i$.

Die i-te Drehmatrix $D_i(\beta_i)$ ergibt sich dabei aus der Formel

$$D_i\left(\beta_i\right) = R_x(\beta_{i,x}) R_y(\beta_{i,y}) R_z(\beta_{i,z})$$

Hierbei ist

$R_x(\beta_{i,x})$    eine übliche Drehmatrix für eine Drehung um den Winkel $\beta_{i,x}$ um die x-Achse und

$R_y(\beta_{i,y})$    eine übliche Drehmatrix für eine Drehung um den Winkel $\beta_{i,y}$ um die y-Achse und

$R_z(\beta_{i,z})$ eine übliche Drehmatrix für eine Drehung um den Winkel $\beta_{i,z}$ um die z-Achse.

Da in der Regel die N Orte $x_1$ bis $x_N$ der N Ultraschall-Transducer am Fahrzeug und die Drehwinkel $(\beta_{1,x}, \beta_{1,y}, \beta_{1,z})$ bis $(\beta_{N,x}, \beta_{N,y}, \beta_{N,z})$ für die N Ultraschall-Transducer in Abhängigkeit von der Fahrzeugkonstruktion bereits feststehen, kann die i-te Drehmatrix $D_i(\beta_i)$ für den i-ten UltraschallTransducer vorausberechnet werden.

Der nach der Methode der kleinsten Quadrate ermittelte Geschwindigkeitsvektor des Reflexionspunktes ergibt sich aus:

$$\hat{v}_o = (X^T X)^{-1} X \hat{y}$$

Somit handelt es sich bei dem hier vorgestellten Verfahren um ein Verfahren zur Bestimmung des dreidimensionalen Geschwindigkeitsvektors eines Objekts im Umfeld eines Fahrzeugs.

Das Fahrzeug weist bevorzugt eine Mehrzahl von N Ultraschall-Transducern $US_1$ bis $US_N$ und ein Auswertesystem auf. Das Auswertesystem kann ein zentrales Auswertesystem für alle UltraschallTransducer sein. Das Auswertesystem kann jedoch auch ganz oder in Teilen ein dezentrales Auswertesystem sein. Im Falle eines solchen dezentralen Auswertesystems, kann im Extremfall jedem Ultraschall-Transducer $US_i$ der N Ultraschall-Transducer $US_1$ bis $US_N$ mit 1≤i≤N ein Teilauswertesystem AS; des Auswertesystems AS zugeordnet sein, sodass ggf. dieses einem Ultraschall-Transducer US; zugeordnete Teilauswertesystem AS; als Teil des betreffenden Ultraschall-Transducers $US_i$ angesehen werden kann. Statt N Ultraschall-Transducer $US_1$ bis $US_N$ können auch N Ultraschall-Empfänger im Zusammenwirken mit mindestens einem Ultraschall-Sender verwendet werden. Unter Ultraschall-Transducern werden also hier ausdrücklich, solange keine Ultraschallsendefunktion erforderlich ist, auch Ultraschall-Empfänger mitverstanden. Die Zahl N ist wie in dieser ganzen Schrift eine ganze positive Zahl mit N≥2. Die N Ultraschall-Transducer $US_1$ bis $US_N$ befinden sich an N zueinander verschiedenen Positionen $x_1$ bis $x_N$. Die N Ultraschall-Transducer $US_1$ bis $US_N$ befinden sich nicht auf einer geraden Linie. Zumindest ein Ultraschall-Transducer, hier beispielhaft der i-te Ultraschall-Transducer $US_i$ der N Ultraschall-Transducer $US_1$ bis $US_N$ sendet Ultraschallsignale aus. Für die Funktionstüchtigkeit des Systems reicht es aus, wenn statt eines Ultraschall-Transducers $US_i$ der N Ultraschall-Transducer $US_1$ bis $US_N$ ein Ultraschallsender das Ultraschallsignal aussendet. Die N Ultraschall-Transducer $US_1$ bis $US_N$ empfangen das durch ein Objekt im Umfeld des Fahrzeugs reflektierte Ultraschallsignal. Jeder Ultraschall-Transducer $US_i$ der N Ultraschall-Transducer $US_1$ bis $US_N$ wandelt das von ihm jeweils empfangene reflektierte Ultraschallsignal in ein jeweiliges Ultraschallempfängerausgangssignal um. Somit wandeln die N Ultra-schall-Transducer $US_1$ bis $US_N$ das reflektierte Ultraschallsignal in N Ultraschallempfängerausgangssignale um. Auf Basis dieser N Ultraschallempfängerausgangssignale ermittelt das Auswertesystem N Laufzeiten des Ultraschallsignals beginnend mit dem Zeitpunkt der Aussendung des Ultraschallsignals durch den sendenden Ultraschall-Transducer bzw. durch einen Ultraschallsender und endend zum jeweiligen Zeitpunkt des jeweiligen Empfangs des durch das Objekt reflektierten Ultraschallsignals durch den jeweiligen Ultraschall-Transducer $US_i$ der N Ultraschall-Transducer $US_1$ bis $US_N$. Aus diesen N Laufzeiten ermittelt typischerweise das Auswertesystem eine Objekt-Position $x_0$ des Objekts .

Jeder Ultraschall-Transducer $US_i$ der N Ultraschall-Transducer $US_1$ bis $US_N$, im Folgenden wieder als i-ter Ultraschall-Transducer $US_i$ mit 1≤i≤N bezeichnet, ermittelt nun im Zusammenwirken mit dem Auswertesystem eine Dopplerfrequenz $f_{d,i}$ für diesen i-ten Ultraschall-Transducer $US_i$, die das durch das Objekt reflektierte Ultraschallsignal beim Empfang durch diesen i-ten Ultraschall-Transducer $US_i$ aufweist.

Wie oben beschrieben wird bei dem hier beschriebenen Verfahren vorausgesetzt, dass für jeden i-ten Ultraschall-Transducer $US_i$ der N Ultraschall-Transducer $US_1$ bis $US_N$ die Orientierungswinkel $\beta_{i,x}$, $\beta_{i,y}$, $\beta_{i,z}$ relativ zum Fahrzeugkoordinatensystem bekannt sind. Des Weiteren wird, wie oben bereits beschrieben, vorausgesetzt, dass für jeden i-ten Ultraschall-Transducer der N Ultraschall-Transducer $US_1$ bis $US_N$ dessen i-te Position $x_i$ am Fahrzeug genauso wie die N-1 Positionen ($x_1$ bis $x_N$ ohne $x_i$) der übrigen Ultraschall-Transducer am Fahrzeug bekannt sind.

Das vorgeschlagene Verfahren setzt also voraus, dass eine Bestimmung der Objekt-Position $x_0$ relativ zum Fahrzeug erfolgreich als ein erster Schritt des Verfahrens durchgeführt wurde. Ein weiterer Schritt umfasst dann das Erfassen der N Dopplerfrequenzen $f_{d,1}$ bis $f_{d,N}$ durch die N UltraschallTransducer $US_1$ bis $US_N$ und deren Auswertesystem. Das Verfahren umfasst des Weiteren das Berechnen der N Dopplergeschwindigkeiten auf Basis der so erfassten N Dopplerfrequenzen $f_{d,1}$ bis $f_{d,N}$ bei der jeweiligen Sendefrequenz $f_s$ des ursprünglich ausgesendeten Ultraschallsignals unter Berücksichtigung der Schallgeschwindigkeit c. Das Verfahren umfasst dann noch die Bestimmung des N-dimensionalen Vektors $\hat{y}$ der durch die N Ultraschall-Transducer gemessenen N Dopplergeschwindigkeiten und das Berechnen der Matrix $X_i$ mit Hilfe der Formel:

$$X_i = e_i D_i(\beta_i).$$

In der Regel werden diese Werte schon in der Fabrik typspezifisch pauschal vorausberechnet und in das System einprogrammiert oder sonst wie anderweitig konstruktiv vorgegeben.

Als letzter Schritt erfolgt das Schätzen der Werte des Geschwindigkeitsvektors $\hat{v}_o$ des Reflexionspunk-

tes des Objekts mittels der Berechnung der folgenden Gleichung durch das Auswertesystem:

$$\hat{\mathbf{v}}_o = \left(\mathbf{X}^\mathsf{T}\mathbf{X}\right)^{-1}\mathbf{X}\hat{\mathbf{y}}$$

Das Auswertesystem gibt die so berechneten Werte des Geschwindigkeitsvektors $\hat{\mathbf{v}}_o$ z.B. über eine Datenschnittstelle aus oder hält sie zum Abruf durch eine andere Vorrichtung bereit oder verarbeitet diese zu anderen Zwecken weiter. Auf diese Weise erfolgt als Abschluss des Verfahrens ein Verwenden der Werte des Geschwindigkeitsvektors $\hat{\mathbf{v}}_o$ als Werte des Geschwindigkeitsvektors der Bewegung des Objekts.

Auf dieser Basis lässt sich ein einfaches, grobes Verfahren zur Unterscheidung zwischen lebenden und toten Objekten beim autonomen Fahren mit einem Fahrzeug angeben, das aber für sich alleine für eine sichere Unterscheidung noch nicht ausreicht. Die Unterscheidung zwischen lebenden und toten Gegenständen erfolgt zunächst dadurch, dass das Auswertesystem sich bewegende Objekte als potenziell lebend einstuft. Hierbei können alle Objekte, die sich in einem vorgebbaren Zeitraum gegenüber der Umgebung bewegt haben als möglicherweise lebend eingestuft werden. Für die Lebend/unbelebt-Unterscheidung zieht die Auswertevorrichtung typischerweise andere Parameter wie beispielsweise Dämpfung, Verzerrung und Phasenverschiebung heran. Insofern ist das im Folgenden beschrieben Verfahren nur als ein teilverfahren zur Unterscheidung zwischen lebenden und toten Objekten beim autonomen Fahren mit einem Fahrzeug zu verstehen. Es umfasst die Schritte

des Ermittelns der Objekt-Position $\mathbf{x}_0$ eines Objekts im Fahrzeugumfeld,

des Ermittelns der Werte des Geschwindigkeitsvektors der Bewegung des Objekts mit Hilfe eines der zuvor vorgestellten beiden Verfahren,

des Erhöhens eines Wahrscheinlichkeitswerts, dass das Objekt ein lebendes Objekt ist, wenn der Betrag des Geschwindigkeitsvektors der Bewegung des Objekts unter einem ersten Schwellwert liegt,

des Erniedrigens dieses Wahrscheinlichkeitswerts, dass das Objekt ein lebendes Objekt ist, wenn der Betrag des Geschwindigkeitsvektors der Bewegung des Objekts über einem zweiten Schwellwert liegt,

wobei dieser zweite Schwellwert ggf. gleich dem ersten Schwellwert sein kann und

wobei der Wahrscheinlichkeitswert von weiteren Parametern abhängen kann,

und abschließend der Bewertung des Objekts als lebendes Objekt, wenn dieser Wahrscheinlichkeitswert über einem dritten Schwellwert liegt.

**Vorteil**

Das hier vorgeschlagene Verfahren ermöglicht eine bessere Unterscheidung von bewegten Objekten, wie Menschen, von der stationären Umgebung, wie beispielsweise einem Isopol (senkrecht stehendes 1m langes DN5 PVC Abwasser-Rohr als Referenzhindernis) oder einer Wand.

Die Vorteile sind hierauf aber nicht beschränkt.

**Beschreibung der Figur**

Figur 1

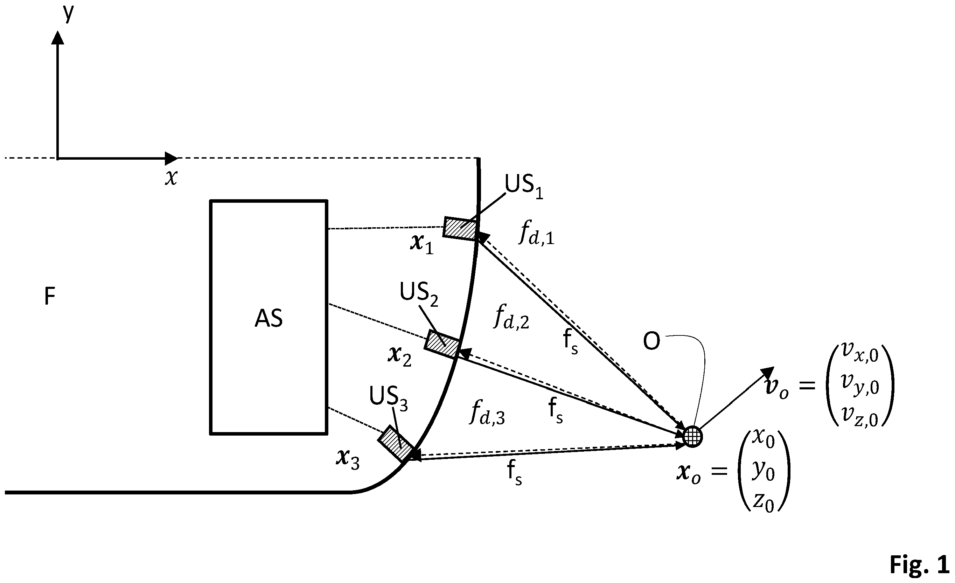

Figur 1 veranschaulicht die Messsituation. Im Fahrzeugumfeld eines Fahrzeugs F, dessen Kontur teilweise als fette Linie beispielhaft angedeutet ist, befindet sich ein Objekt O. Nachdem ein Ultraschallsender und/oder ein Ultraschall-Transducer $US_i$ ein akustisches Ultraschallsignal in dieses Fahrzeugumfeld hinein gesendet haben, reflektiert das Objekt O dieses Ultraschallsignal, dass dann als reflektiertes Ultraschallsignal von den hier mit N=3 beispielhaften drei Ultraschall-Transducern $US_1$ bis $US_3$ und/oder Ultraschall-Empfängern jeweils mit einer spezifischen Laufzeit, die vom jeweils zurückgelegten Schallweg abhängt empfangen wird. Das Objekt O bewegt sich mit der Objektgeschwindigkeit $\mathbf{v}_0$ relativ zum Fahrzeug F. Die beispielhaften Ultraschall-Transducer $US_1$, $US_2$, $US_3$ und ein Auswertesystem AS ermitteln die Position $\mathbf{x}_0$ des Objekts O relativ zum Fahrzeug F anhand der Laufzeiten des Ultraschallsignals beginnend mit dem Zeitpunkt der Aussendung des Ultraschallsignals durch den sendenden Ultraschall-Transducer bzw. durch einen Ultraschallsender und endend zum jeweiligen Zeitpunkt des jeweiligen Empfangs des durch das Objekt reflektierten Ultraschallsignals durch den jeweiligen Ultraschall-Transducer $US_1$ bis $US_3$. Durch die Bewegung des Objekts O mit der Objektgeschwindigkeit $\mathbf{v}_O$ relativ zum Fahrzeug F wird die Frequenz des reflektierten Ultraschallsignals von der Ultraschallsendefrequenz $f_s$, mit der das Ultraschallsignal ausgesendet wurde, zu einer Dopplerfrequenz $f_d$ transformiert. Diese Transformation ist aber richtungsabhängig. Da sich die Ultraschall-Transducer $US_1$ bis $US_3$ an unterschiedlichen Koordinaten $\mathbf{x}_1$ bis $\mathbf{x}_3$ relativ zum Fahrzeugkoordinatensystem befinden, kommt diese Richtungsabhängigkeit zur Geltung, wodurch die drei Ultraschall-Transducer ($US_1$ bis $US_3$) drei unterschiedliche Dopplerfrequenzen $f_{d,1}$, $f_{d,2}$, $f_{d,3}$ erfassen. Die drei Ultraschall-Transducer $US_1$ bis $US_3$ und/oder das Auswertesystem AS ermitteln auf Basis des durch den jeweiligen Ultraschall-Transducer $US_i$ mit i=1 oder i=2 oder i=3 die jeweilige, diesem Ultraschall-Transducer $US_i$ und dem Objekt zugeordnete Dopplerfrequenz $f_{d,i}$. Auf Basis der so ermittelten Dopplerfrequenzen $f_{d,i}$ ermittelt das Auswertesystem AS ggf. im Zusammenwirken mit den beispielhaften drei Ultraschall-Transducern $US_1$, $US_2$, $US_3$ dann eine geschätzte Objektgeschwindigkeit $\hat{v}_o$, die dann durch das Fahrzeug und/oder Teilsysteme des Fahrzeugs z.B abgerufen und für andere Zwecke verwendet werden kann.

**Bezugszeichen**

| | |
|---|---|
| F | Fahrzeug |
| $US_i$ | Ultraschall-Transducer |
| AS | Auswertesystem |
| O | Objekt |
| $f_s$ | Ultraschallsendefrequenz |
| $f_d$ | Dopplerfrequenz |
| $\beta_{i,x}$, $\beta_{i,y}$, $\beta_{i,z}$ | Orientierungswinkel |
| $x_O$ | Position des Objektes |
| $x_i$ | Position des i-ten Ultraschall-Transducers |
| $\hat{v}_o$ | Geschwindigkeitsvektor |
| c | Schallgeschwindigkeit |

**Patentansprüche**

1. Verfahren zur Bestimmung eines **zweidimensionalen** Geschwindigkeitsvektors ($\hat{v}_o$) eines Objekts (O) im zweidimensional darstellbaren Umfeld eines Fahrzeugs (F),

   wobei das Fahrzeug (F) eine Mehrzahl von N Ultraschall-Transducern ($US_1$ bis $US_N$) aufweist und

   wobei das Fahrzeug (F) ein Auswertesystem (AS) aufweist und

   wobei N eine ganze positive Zahl mit N>2 ist und wobei die N Ultraschall-Transducer ($US_1$ bis $US_N$) sich an N verschiedenen Punkten $x_1$ bis $x_N$ befinden und

   wobei zumindest ein Ultraschall-Transducer ($US_i$) der N Ultraschall-Transducer ($US_1$ bis $US_N$) oder zumindest ein Ultraschallsender ein Ultraschallsignal aussendet und

   wobei jeder der N Ultraschall-Transducer ($US_1$ bis $US_N$) jeweils eine spezifische Laufzeit aufweist, wobei die jeweilige Laufzeit vom jeweils zurückgelegten Schallweg abhängt

   wobei die N Ultraschall-Transducer ($US_1$ bis $US_N$) das durch ein Objekt (O) im Umfeld des Fahrzeugs (F) reflektierte Ultraschallsignal empfangen und

   wobei das Auswertesystem (AS) aus den N Laufzeiten des Ultraschallsignals von dem Zeitpunkt deren Aussendung bis zum jeweiligen Zeitpunkt des Empfangs des durch das Objekt (O) reflektierten Ultraschallsignals durch jeweils

einen UltraschallTransducer ($US_i$) der N Ultraschall-Transducer ($US_1$ bis $US_N$) eine Objekt-Position ($x_0$) ermittelt und

wobei jeder Ultraschall-Transducer ($US_i$) der N Ultraschall-Transducer ($US_1$ bis $US_N$), im Folgenden als i-ter Ultraschall-Transducer ($US_i$) mit $1 \leq i \leq N$ bezeichnet, im Zusammenwirken mit dem Auswertesystem (AS) eine Dopplerfrequenz $f_{d,i}$ für diesen i-ten Ultraschall-Transducer ($US_i$) ermittelt und

wobei für jeden i-ten Ultraschall-Transducer ($US_i$) der N Ultraschall-Transducer ($US_1$ bis $US_N$) die Orientierungswinkel ($\beta_{i,x}$, $\beta_{i,y}$, $\beta_{i,z}$) bekannt sind und

wobei für jeden i-ten Ultraschall-Transducer der N Ultraschall-Transducer ($US_1$ bis $US_N$) die i-te Position ($x_i$) als eine von N Positionen ($x_1$ bis $x_N$) am Fahrzeug (F) bekannt ist, umfassend die Schritte:

   Bestimmen der Objekt-Position $x_0$ des Objekts (O) relativ zum Fahrzeug (F);
   Erfassen der N Dopplerfrequenzen ( $f_{d,1}$ bis $f_{d,N}$)
   Berechnen der N Dopplergeschwindigkeiten auf Basis der N Dopplerfrequenzen ($f_{d,1}$ bis $f_{d,N}$) bei der jeweiligen Sendefrequenz ($f_s$) unter Berücksichtigung der Schallgeschwindigkeit (c)
   Bestimmung des N-dimensionalen Vektors $\hat{y}$ der durch die N Ultraschall-Transducer gemessenen N Dopplergeschwindigkeiten;
   Berechnen der Matrix $\mathbf{X}_i$ mit Hilfe der Formel

$$\mathbf{X}_i = e_i D_i(\beta_i)$$

   wobei $\mathbf{e}_i$ der normierte Einheitsrichtungsvektor längs der Strecke zwischen dem Objekt und dem i-ten Ultraschall-Transducer $US_i$ ist und
   wobei $\mathbf{D_i}(\beta_i)$ eine Drehmatrix in Abhängigkeit der drei Drehwinkel ($\beta_{i,x}$, $\beta_{i,y}$, $\beta_{i,z}$) des i-ten Ultraschall-Transducer $US_i$ spezifischen i-ten Drehwinkelvektors $\beta_i$ ist und
   Schätzen der Werte des Geschwindigkeitsvektors ($\hat{v}_o$) des Reflexionspunktes des Objekts (O) nach der Methode der kleinsten Quadrate mittels Berechnung von

$$\hat{v}_o = \left(X^T X\right)^{-1} X \hat{y}$$

   Ausgeben und/oder Bereithalten der Werte des Geschwindigkeitsvektors ($\hat{v}_o$) und Verwenden der Werte des Geschwindigkeitsvektors ($\hat{v}_o$) als Werte des Geschwindigkeitsvektors der Bewegung des Objekts (O).

2. Verfahren zur Bestimmung des **dreidimensionalen** Geschwindigkeitsvektors ($\hat{v}_o$) eines Objekts (O) im Umfeld eines Fahrzeugs (F),

   wobei das Fahrzeug (F) eine Mehrzahl von N Ultraschall-Transducern ($US_1$ bis $US_N$) aufweist und

   wobei das Fahrzeug (F) ein Auswertesystem (AS) aufweist und

   wobei N eine ganze positive Zahl mit N>2 ist und

   wobei die N Ultraschall-Transducer ($US_1$ bis $US_N$) sich an N verschiedenen Punkten $x_1$ bis $x_N$ befinden und

   wobei die N Ultraschall-Transducer ($US_1$ bis $US_N$) sich nicht auf einer geraden Linie befinden und

   wobei zumindest ein Ultraschall-Transducer ($US_i$) der N Ultraschall-Transducer ($US_1$ bis $US_N$) oder zumindest ein Ultraschallsender ein Ultraschallsignal aussendet und

   wobei jeder der N Ultraschall-Transducer ($US_1$ bis $US_N$) jeweils eine spezifische Laufzeit aufweist, wobei die jeweilige Laufzeit vom jeweils zurückgelegten Schallweg abhängt und

   wobei die N Ultraschall-Transducer ($US_1$ bis $US_N$) das durch ein Objekt (O) im Umfeld des Fahrzeugs (F) reflektierte Ultraschallsignal empfangen und

   wobei das Auswertesystem (AS) aus den N Laufzeiten des Ultraschallsignals von dem Zeitpunkt deren Aussendung bis zum jeweiligen Zeitpunkt des Empfangs des durch das Objekt (O) reflektierten Ultraschallsignals durch jeweils einen UltraschallTransducer ($US_i$) der N Ultraschall-Transducer ($US_1$ bis $US_N$) eine Objekt-Position ($x_0$) ermittelt und

   wobei jeder Ultraschall-Transducer ($US_i$) der N Ultraschall-Transducer ($US_1$ bis $US_N$), im Folgenden als i-ter Ultraschall-Transducer ($US_i$) mit $1 \leq i \leq N$ bezeichnet, im Zusammenwirken mit dem Auswertesystem (AS) eine Dopplerfrequenz $f_{d,i}$ für diesen i-ten Ultraschall-Transducer ($US_i$) ermittelt und

   wobei für jeden i-ten Ultraschall-Transducer ($US_i$) der N Ultraschall-Transducer ($US_1$ bis $US_N$) die Orientierungswinkel ($\beta_{i,x}$, $\beta_{i,y}$, $\beta_{i,z}$) bekannt sind und

   wobei für jeden i-ten Ultraschall-Transducer der N Ultraschall-Transducer ($US_1$ bis $US_N$) die i-te Position ($x_i$) als eine von N Positionen ($x_1$ bis $x_N$) am Fahrzeug (F) bekannt ist,
   umfassend die Schritte:

      Bestimmen der Objekt-Position $x_0$ des Objekts (O) relativ zum Fahrzeug (F);
      Erfassen der N Dopplerfrequenzen ($f_{d,1}$ bis

$f_{d,N}$)
      Berechnen der N Dopplergeschwindigkeiten auf Basis der N Dopplerfrequenzen ($f_{d,1}$ bis $f_{d,N}$) bei der jeweiligen Sendefrequenz ($f_s$) unter Berücksichtigung der Schallgeschwindigkeit (c)
      Bestimmung des N-dimensionalen Vektors $\hat{y}$ der durch die N Ultraschall-Transducer gemessenen N Dopplergeschwindigkeiten;
      Berechnen der Matrix $\mathbf{X_i}$ mit Hilfe der Formel

$$\mathbf{X_i} = \mathbf{e_i} \mathbf{D_i}(\beta_i)$$

      wobei $\mathbf{e_i}$ der normierte Einheitsrichtungsvektor längs der Strecke zwischen dem Objekt und dem i-ten Ultraschall-Transducer $US_i$ ist und
      wobei $D_i(\beta_i)$ eine Drehmatrix in Abhängigkeit der drei Drehwinkel ($\beta_{i,x}$, $\beta_{i,y}$, $\beta_{i,z}$) des i-ten Ultraschall-Transducer $US_i$ spezifischen i-ten Drehwinkelvektors $\beta_i$ ist und
      Schätzen der Werte des **dreidimensionalen** Geschwindigkeitsvektors ($\hat{v}_o$) des Reflexionspunktes des Objekts (O) nach der Methode der kleinsten Quadrate mittels Berechnung von

$$\hat{\mathbf{v}}_o = \left(\mathbf{X}^\mathsf{T}\mathbf{X}\right)^{-1}\mathbf{X}\hat{\mathbf{y}}$$

      Ausgeben und/oder Bereithalten der Werte des **dreidimensionalen** Geschwindigkeitsvektors ($\hat{v}_o$) und
      Verwenden der Werte des **dreidimensionalen** Geschwindigkeitsvektors ($\hat{v}_o$) als Werte des Geschwindigkeitsvektors der Bewegung des Objekts (O).

3. Verfahren zur Unterscheidung zwischen lebenden und toten Objekten beim autonomen Fahren mit einem Fahrzeug (F)
   umfassend die Schritte:

      Ermitteln einer Objekt-Position ($x_0$) eines Objekts (O) im Fahrzeugumfeld;
      Ermitteln der Werte des Geschwindigkeitsvektors ($\hat{v}_o$) der Bewegung des Objekts (O) mit Hilfe eines Verfahrens nach Anspruch 1 oder Anspruch 2;
      Erhöhen eines Wahrscheinlichkeitswerts, dass das Objekt (O) ein lebendes Objekt ist, wenn der Betrag des Geschwindigkeitsvektors ($\hat{v}_o$) der Bewegung des Objekts (O) unter einem ersten Schwellwert liegt und
      Erniedrigung des Wahrscheinlichkeitswerts, dass das Objekt (O) ein lebendes Objekt ist, wenn der Betrag des Geschwindigkeitsvektors

($\hat{\mathbf{v}}_o$) der Bewegung des Objekts (O) über einem zweiten Schwellwert liegt, der gleich dem ersten Schwellwert sein kann,

wobei der Wahrscheinlichkeitswert von den weiteren Parametern Dämpfung und/oder Verzerrung und/oder Phasenverschiebung abhängt, und

Bewertung des Objekts (O) als lebendes Objekt, wenn dieser Wahrscheinlichkeitswert über einem dritten Schwellwert liegt.

## Claims

1. method for determining a **two-dimensional** velocity vector ($\hat{\mathbf{v}}_o$) of an object (O) in the two-dimensional environment of a vehicle (F),

   wherein the vehicle (F) comprises a plurality of N ultrasonic transducers ($US_1$ to $US_N$) and wherein the vehicle (F) has an evaluation system (AS) and where N is a positive integer with N>2 and where the N ultrasonic transducers ($US_1$ to $US_N$) are located at N different points $x_1$ to $x_N$ and wherein at least one ultrasonic transducer ($US_i$) of the N ultrasonic transducers ($US_1$ to $US_N$) or at least one ultrasonic transmitter emits an ultrasonic signal and

   wherein each of the N ultrasonic transducers ($US_1$ to $US_N$) has a specific transit time, wherein the respective transit time depends on the respective sound path traveled

   wherein the N ultrasonic transducers ($US_1$ to $US_N$) receive the ultrasonic signal reflected by an object (O) in the vicinity of the vehicle (F), and

   wherein the evaluation system (AS) determines an object position ($x_0$) from the N transit times of the ultrasonic signal from the time of its transmission to the respective time of reception of the ultrasonic signal reflected by the object (O) by a respective ultrasonic transducer ($US_i$) of the N ultrasonic transducers ($US_1$ to $US_N$), and

   wherein each ultrasonic transducer ($US_i$) of the N ultrasonic transducers ($US_1$ to $US_N$), hereinafter referred to as i-th ultrasonic transducer ($US_i$) with $1 \le i \le N$, in cooperation with the evaluation system (AS) determines a Doppler frequency $f_{d,i}$ for this i-th ultrasonic transducer ($US_i$) and

   wherein the orientation angles ($\beta_{i,x}$, $\beta_{i,y}$, $\beta_{i,z}$) are known for each i-th ultrasonic transducer ($US_i$) of the N ultrasonic transducers ($US_1$ to $US_N$), and

   wherein for each i-th ultrasonic transducer of the N ultrasonic transducers ($US_1$ to $US_N$), the i-th position ($x_i$) is known as one of N positions ($x_1$ to $x_N$) on the vehicle (F),

comprehensive steps:

   Determine the object position $x_0$ of the object (O) relative to the vehicle (F);

   Detection of the N Doppler frequencies ($f_{d,1}$ to $f_{d,N}$);

   Calculate the N Doppler velocities on the basis of the N Doppler frequencies ($f_{d,1}$ to $f_{d,N}$) at the respective transmission frequency ($f_s$) taking into account the speed of sound (c)

   Determination of the N-dimensional vector $\hat{\mathbf{y}}$ of the N Doppler velocities measured by the N ultrasonic transducers;

   Calculating the matrix $\mathbf{X_i}$ using the formula

$$\mathbf{X_i} = e_i D_i(\beta_i)$$

   where $\mathbf{e_i}$ is the normalized unit direction vector along the distance between the object and the i-th ultrasonic transducer $US_i$ and where $\mathbf{D_i}(\beta_i)$ a rotation matrix as a function of the three rotation angles ($\beta_{i,x}$, $\beta_{i,y}$, $\beta_{i,z}$) of the i-th ultrasonic transducer $US_i$ specific i-th rotation angle vector $\beta_i$ and

   Estimate the values of the velocity vector ($\hat{\mathbf{v}}_o$) of the reflection point of the object (O) using the least squares method by calculating

$$\hat{\mathbf{v}}_o = \left(\mathbf{X}^T\mathbf{X}\right)^{-1}\mathbf{X}\hat{\mathbf{y}}$$

   Output and/or hold ready the values of the velocity vector ($\hat{\mathbf{v}}_o$) and

   Use the values of the velocity vector ($\hat{\mathbf{v}}_o$) as values of the velocity vector of the movement of the object (O).

2. method for determining the **three-dimensional** velocity vector ($\hat{\mathbf{v}}_o$) of an object (O) in the vicinity of a vehicle (F),

   wherein the vehicle (F) comprises a plurality of N ultrasonic transducers ($US_1$ to $US_N$) and wherein the vehicle (F) has an evaluation system (AS) and

   where N is a positive integer with N>2 and where the N ultrasonic transducers ($US_1$ to $US_N$) are located at N different points $x_1$ to $x_N$ and

   where the N ultrasonic transducers ($US_1$ to $US_N$) are not in a straight line and

   wherein at least one ultrasonic transducer ($US_i$) of the N ultrasonic transducers ($US_1$ to $US_N$) or at least one ultrasonic transmitter emits an ultrasonic signal and

   wherein each of the N ultrasonic transducers

($US_1$ to $US_N$) has a specific transit time, wherein the respective transit time depends on the respective sound path traveled

wherein the N ultrasonic transducers ($US_1$ to $US_N$) receive the ultrasonic signal reflected by an object (O) in the vicinity of the vehicle (F), and wherein the evaluation system (AS) determines an object position ($x_0$) from the N transit times of the ultrasonic signal from the time of its transmission to the respective time of reception of the ultrasonic signal reflected by the object (O) by a respective ultrasonic transducer ($US_i$) of the N ultrasonic transducers ($US_1$ to $US_N$), and

wherein each ultrasonic transducer ($US_i$) of the N ultrasonic transducers ($US_1$ to $US_N$), hereinafter referred to as i-th ultrasonic transducer ($US_i$) with $1 \leq i \leq N$, in cooperation with the evaluation system (AS) determines a Doppler frequency $f_{d,i}$ for this i-th ultrasonic transducer ($US_i$) and

wherein the orientation angles ($\beta_{i,x}$, $\beta_{i,y}$, $\beta_{i,z}$) are known for each i-th ultrasonic transducer ($US_i$) of the N ultrasonic transducers ($US_1$ to $US_N$), and

wherein for each i-th ultrasonic transducer of the N ultrasonic transducers ($US_1$ to $US_N$), the i-th position ($x_i$) is known as one of N positions ($x_1$ to $x_N$) on the vehicle (F),

comprehensive steps:

> Determine the object position $x_0$ of the object (O) relative to the vehicle (F);
> Detection of the N Doppler frequencies ($f_{d,1}$ to $f_{d,N}$)
> Calculate the N Doppler velocities on the basis of the N Doppler frequencies ($f_{d,1}$ to $f_{d,N}$) at the respective transmission frequency ($f_s$) taking into account the speed of sound (c)
> Determination of the N-dimensional vector $\hat{y}$ of the N Doppler velocities measured by the N ultrasonic transducers;
> Calculating the matrix $X_i$ using the formula

$$X_i = e_i D_i(\beta_i)$$

> where $e_i$ is the normalized unit direction vector along the distance between the object and the i-th ultrasonic transducer $US_i$ and where $D_i(\beta_i)$ a rotation matrix as a function of the three rotation angles ($\beta_{i,x}$, $\beta_{i,y}$, $\beta_{i,z}$) of the i-th ultrasonic transducer $US_i$ specific i-th rotation angle vector $\beta_i$ and
> Estimate the values of the **three-dimensional** velocity vector ($\hat{v}_o$) of the reflection point of the object (O) using the least squares method by calculating

$$\hat{v}_o = (X^T X)^{-1} X \hat{y}$$

> Outputting and/or holding ready the values of the **three-dimensional** velocity vector ($\hat{v}_o$) and
> Using the values of the **three-dimensional** velocity vector ($\hat{v}_o$) as values of the velocity vector of the movement of the object (O).

3. method for distinguishing between living and dead objects during autonomous driving with a vehicle (F) comprehensive steps:

> Determining an object position ($x_0$) of an object (O) in the vehicle environment;
> Determining the values of the velocity vector ($\hat{v}_o$) of the movement of the object (O) by means of a method according to claim 1 or claim 2;
> Increasing a probability value that the object (O) is a living object when the magnitude of the velocity vector ($\hat{v}_o$) of the movement of the object (O) is below a first threshold value and
> decreasing the probability value that the object (O) is a living object when the magnitude of the velocity vector ($\hat{v}_o$) of the movement of the object (O) is above a second threshold value, which may be equal to the first threshold value,
> where the probability value depends on the further parameters attenuation and/or distortion and/or phase shift, and
> Evaluation of the object (O) as a living object if this probability value is above a third threshold value.

**Revendications**

1. méthode de détermination d'un vecteur de vitesse **bidimensionnel** ($\hat{v}_o$) d'un objet (O) dans l'environnement représentable en deux dimensions d'un véhicule (F),

> dans lequel le véhicule (F) comprend une pluralité de N transducteurs ultrasoniques ($US_1$ à $US_N$) et
> le véhicule (F) comprenant un système d'évaluation (AS) et
> où N est un nombre entier positif avec N>2 et les N transducteurs ultrasonores ($US_1$ à $US_N$) étant situés en N points différents $x_1$ à $x_N$ et
> dans lequel au moins un transducteur ultrasonore ($US_i$) des N transducteurs ultrasonores ($US_1$ à $US_N$) ou au moins un émetteur ultrasonore émet un signal ultrasonore et
> chacun des N transducteurs ultrasonores ($US_1$ à $US_N$) ayant un temps de propagation spécifique, le temps de propagation respectif dépendant du trajet acoustique respectif parcouru
dans lequel les N transducteurs ultrasonores ($US_1$ à $US_N$) reçoivent le signal ultrasonore réfléchi par un objet (O) dans l'environnement du véhicule (F) et

le système d'évaluation (AS) déterminant une position d'objet ($x_0$) à partir des N temps de parcours du signal ultrasonore depuis l'instant de son émission jusqu'à l'instant respectif de la réception du signal ultrasonore réfléchi par l'objet (O) par respectivement un transducteur ultrasonore ($US_i$) des N transducteurs ultrasonores ($US_1$ à $US_N$) et

chaque transducteur ultrasonore ($US_i$) des N transducteurs ultrasonores ($US_1$ à $US_N$), désigné ci-après comme i-ième transducteur ultrasonore ($US_i$) avec $1 \leq i \leq N$, déterminant en coopération avec le système d'évaluation (AS) une fréquence Doppler $f_{d,i}$ pour ce i-ième transducteur ultrasonore ($US_i$) et

les angles d'orientation ($\beta_{i,x}$, $\beta_{i,y}$, $\beta_{i,z}$) étant connus pour chaque i-ième transducteur ultrasonore ($US_i$) des N transducteurs ultrasonores ($US_1$ à $US_N$), et

dans lequel, pour chaque ième transducteur ultrasonore des N transducteurs ultrasonores ($US_1$ à $US_N$), la ième position ($x_i$) est connue comme l'une des N positions ($x_1$ à $x_N$) sur le véhicule (F),
comprend les étapes :

> Déterminer la position de l'objet $x_0$ de l'objet (O) par rapport au véhicule (F);
> Saisie des N fréquences Doppler ($f_{d,1}$ à $f_{d,N}$)
> Calculer les N vitesses Doppler sur la base des N fréquences Doppler ($f_{d,1}$ à $f_{d,N}$) à la fréquence d'émission correspondante ($f_s$) en tenant compte de la vitesse du son (c)
> Détermination du vecteur à N dimensions $\hat{y}$ des N vitesses Doppler mesurées par les N transducteurs ultrasonores ;
> Calculer la matrice $\mathbf{X_i}$ à l'aide de la formule

$$\mathbf{X_i} = \mathbf{e_i} \mathbf{D_i}(\beta_i)$$

> où $\mathbf{e_i}$ est le vecteur directionnel unitaire normalisé le long de la distance entre l'objet et le ième transducteur ultrasonore US; et
> où $\mathbf{D_i}(\beta_i)$ une matrice de rotation en fonction des trois angles de rotation ($\beta_{i,x}$, $\beta_{i,y}$, $\beta_{i,z}$) du ième transducteur ultrasonore $US_i$ ième vecteur d'angle de rotation spécifique $\beta_i$ est et
> Estimation des valeurs du vecteur vitesse ($\hat{v}_o$) du point de réflexion de l'objet (O) par la méthode des moindres carrés en calculant

$$\hat{\mathbf{v}}_o = \left(\mathbf{X}^T\mathbf{X}\right)^{-1}\mathbf{X}\hat{\mathbf{y}}$$

> Sortie et/ou mise à disposition des valeurs du vecteur vitesse ($\hat{v}_o$) et
> Utiliser les valeurs du vecteur vitesse ($\hat{v}_o$) comme valeurs du vecteur vitesse du mouvement de l'objet (O).

**2.** méthode de détermination du vecteur de vitesse **tridimensionnel** ($\hat{v}_o$) d'un objet (O) dans

> l'environnement d'un véhicule (F),
> dans lequel le véhicule (F) comprend une pluralité de N transducteurs ultrasoniques ($US_1$ à $US_N$) et
> le véhicule (F) comprenant un système d'évaluation (AS) et
> où N est un nombre entier positif avec N>2 et
> les N transducteurs ultrasonores ($US_1$ à $US_N$) étant situés en N points différents $x_1$ à $x_N$ et
> les N transducteurs ultrasonores ($US_1$ à $US_N$) n'étant pas situés sur une ligne droite, et
> dans lequel au moins un transducteur ultrasonore ($US_i$) des N transducteurs ultrasonores ($US_1$ à $US_N$) ou au moins un émetteur ultrasonore émet un signal ultrasonore et
> chacun des N transducteurs ultrasonores ($US_1$ à $US_N$) ayant un temps de propagation spécifique, le temps de propagation respectif dépendant de la distance acoustique respectivement parcourue
> dans lequel les N transducteurs ultrasonores ($US_1$ à $US_N$) reçoivent le signal ultrasonore réfléchi par un objet (O) dans l'environnement du véhicule (F) et
> le système d'évaluation (AS) déterminant une position d'objet ($x_0$) à partir des N temps de parcours du signal ultrasonore depuis l'instant de son émission jusqu'à l'instant respectif de la réception du signal ultrasonore réfléchi par l'objet (O) par respectivement un transducteur ultrasonore ($US_i$) des N transducteurs ultrasonores ($US_1$ à $US_N$) et
> chaque transducteur ultrasonore ($US_i$) des N transducteurs ultrasonores ($US_1$ à $US_N$), désigné ci-après comme i-ième transducteur ultrasonore ($US_i$) avec $1 \leq i \leq N$, déterminant en coopération avec le système d'évaluation (AS) une fréquence Doppler $f_{d,i}$ pour ce i-ième transducteur ultrasonore ($US_i$) et
> les angles d'orientation ($\beta_{i,x}$, $\beta_{i,y}$, $\beta_{i,z}$) étant connus pour chaque i-ième transducteur ultrasonore ($US_i$) des N transducteurs ultrasonores ($US_1$ à $US_N$), et
> dans lequel, pour chaque ième transducteur ultrasonore des N transducteurs ultrasonores ($US_1$ à $US_N$), la ième position ($x_i$) est connue

comme l'une des N positions ($x_1$ à $x_N$) sur le véhicule (F),
comprend les étapes:

Déterminer la position de l'objet $x_0$ de l'objet (O) par rapport au véhicule (F);
Saisie des N fréquences Doppler ($f_{d,1}$ à $f_{d,N}$);
Calculer les N vitesses Doppler sur la base des N fréquences Doppler ($f_{d,1}$ à $f_{d,N}$) à la fréquence d'émission correspondante ($f_s$) en tenant compte de la vitesse du son (c)
Détermination du vecteur à N dimensions $\hat{y}$ des N vitesses Doppler mesurées par les N transducteurs ultrasonores;
Calculer la matrice $X_i$ à l'aide de la formule

$$X_i = e_i D_i(\beta_i)$$

où $e_i$ est le vecteur directionnel unitaire normalisé le long de la distance entre l'objet et le ième transducteur ultrasonore US; et
où $D_i(\beta_i)$ une matrice de rotation en fonction des trois angles de rotation ($\beta_{i,x}$, $\beta_{i,y}$, $\beta_{i,z}$) du ième transducteur ultrasonore $US_i$ ième vecteur d'angle de rotation spécifique $\beta_i$.est et
Estimation des valeurs du vecteur vitesse **tridimensionnel** ($\hat{v}_o$) du point de réflexion de l'objet (O) par la méthode des moindres carrés en calculant

$$\hat{v}_o = (X^T X)^{-1} X \hat{y}$$

émettre et/ou tenir à disposition les valeurs du vecteur de vitesse **tridimensionnel** ($\hat{v}_o$) et
Utiliser les valeurs du vecteur de vitesse **tridimensionnel** ($\hat{v}_o$) comme valeurs du vecteur vitesse du mouvement de l'objet (O).

3. méthode pour distinguer les objets vivants des objets morts lors de la conduite autonome d'un véhicule (F) comprend les étapes:

Détermination d'une position d'objet ($x_0$) d'un objet (O) dans l'environnement du véhicule ;
Déterminer les valeurs du vecteur vitesse ($\hat{v}_o$) du mouvement de l'objet (O) à l'aide d'un procédé selon la revendication 1 ou la revendication 2 ;
Augmentation d'une valeur de probabilité que l'objet (O) soit un objet vivant lorsque la valeur absolue du vecteur vitesse ($\hat{v}_o$) du mouvement de l'objet (O) est inférieure à une première valeur seuil, et

Diminution de la valeur de probabilité que l'objet (O) soit un objet vivant lorsque la valeur du vecteur vitesse ($\hat{v}_o$) du mouvement de l'objet (O) est supérieure à une deuxième valeur seuil, qui peut être égale à la première valeur seuil, la valeur de probabilité dépendant des autres paramètres d'atténuation et/ou de distorsion et/ou de déphasage, et
évaluation de l'objet (O) comme objet vivant si cette valeur de probabilité est supérieure à une troisième valeur seuil.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009029465 A1
- EP 3299845 A1
- DE 102018121962 B1